Europäisches Patentamt

European Patent Office

Office européen des brevets

(19)

(11) Veröffentlichungsnummer : **0 150 058
B1**

(12) EUROPÄISCHE PATENTSCHRIFT

(45) Veröffentlichungstag der Patentschrift :
13.04.88

(51) Int. Cl.⁴ : **F 16 H 19/00, B 23 Q 5/38**

(21) Anmeldenummer : **85100495.2**

(22) Anmeldetag : **18.01.85**

(54) Antrieb mit einem endlosen, zweiseitig verzahnten und in eine Zahnstange eingreifenden Treibelement.

(30) Priorität : **23.01.84 DE 8402095 U**

(43) Veröffentlichungstag der Anmeldung :
**31.07.85 Patentblatt 85/31**

(45) Bekanntmachung des Hinweises auf die Patenterteilung : **13.04.88 Patentblatt 88/15**

(84) Benannte Vertragsstaaten :
**AT BE CH DE FR GB IT LI LU NL SE**

(56) Entgegenhaltungen :
**CH-A- 269 369
DE-A- 1 425 748
DE-A- 2 619 021
DE-B- 1 229 552
DE-B- 2 723 062
FR-A- 2 451 517
GB-A- 149 413
GB-A- 166 220
GB-A- 544 559
US-A- 3 399 578
US-A- 3 824 871**

(73) Patentinhaber : **Hamül Werkzeugfabrik Th. Kirschbaum KG
Meusselsdorfer Strasse 27
D-8590 Marktredwitz (DE)**

(72) Erfinder : **Küspert, Max
Weiherwiesenweg 13
D-8590 Marktredwitz (DE)**

(74) Vertreter : **Voigt, Günter, Dipl.-Ing.
Patentanwälte Dr.-Ing. Alfred Schulze, Dipl.-Ing. Günter Voigt & Partner Nordring 152, Postfach 210104
D-8500 Nürnberg 21 (DE)**

EP 0 150 058 B1

## Beschreibung

Die Erfindung bezieht sich auf einen Antrieb mit einem endlosen, zweiseitig verzahnten und in eine Zahnstange eingreifenden Treibelement, mit mindestens einem Antriebsrad und ersten Umlenkelementen gemäß Oberbegriff des Anspruchs 1.

Ein solcher Antrieb ist grundsätzlich bereits aus der DE-PS 1 229 552 bekannt, in der eine Vorrichtung für den Transport von randgelochten Stoffbahnen, insbesondere von endlosen Formularsätzen, beschrieben wird. Die Vorrichtung besteht dabei aus einem mit Mitnehmerdornen versehenen endlosen Transportband, das über eine zwischen Transporträdern starr angeordnete gewölbte Brücke als Führungselement verläuft. In den Randbereichen weist die Brücke dabei einen wesentlich größeren Radius als den der Transportträger auf. Im Mittelbereich der Brücke ist hingegen eine geradlinig verlaufende Mantelfläche vorhanden.

Aus dem DE-GM 1 780 079 ist ferner eine zweiseitige Zahnkette bekannt, die als Übertragungselement zwischen verschiedenen Zahnrädern dient. Bei solchen Zahnketten ist der Zahnflankenwinkel eine Funktion des Krümmungsradius der Zahnkette. Würde eine solche Zahnkette über die weiter oben beschriebene Brücke der bekannten Vorrichtung geführt, so würden sich im Mittelbereich mit seinem geradlinigen Verlauf und in den Randbereichen mit den relativ großen Krümmungsradien unterschiedliche Flankenwinkel der Zahnkette einstellen. Damit ergäben sich zwangsläufig Probleme bezüglich der als Gegenprofil dienenden Zahnstange.

Aus der DE-PS 2 910 373 ist ein sehr präzise arbeitender Zahnriemen bekannt, dessen Einsatzgebiet jedoch im wesentlichen auf kleinere und leichtere Maschinen bzw. Maschinenteile beschränkt ist, wobei die systembedingte Elastizität nicht stört.

Aus der US-PS 3 824 871 ist ferner eine Vorrichtung bekannt, bei der ein Behälter mittels eines über Kettenzahnräder bewegten Kettentriebes in eine Hin- und Herbewegung versetzt wird, um Schüttgüter relativ gleichmäßig in einem Speicher zu verteilen. Eine Präzisionsbewegung und Präzisionspositionierung läßt sich mit dieser bekannten Vorrichtung nicht erzielen. Insbesondere bei einem Wechsel der Bewegungsrichtung stört das bei dieser bekannten Vorrichtung erforderliche Spiel zwischen den miteinander im Eingriff stehenden Elementen.

Aus der DE-OS 1 425 748 ist eine andere Vorrichtung bekannt, die ebenfalls eine Umwandlung einer drehenden Bewegung in eine hin- und hergehende Bewegung gestattet und insbesondere als Changiervorrichtung für Spuleinrichtungen verwendet werden soll. Auch hier ist eine Präzisionsbewegung weder möglich noch erforderlich.

In der DE-OS 2 619 021 wird eine Bewegungsschraube beschrieben, die insbesondere der Fernsteuerung fast widerstandslos beweglicher Geräteteile dient. Die Drehung des Motors wird über einen Zahnriemen von der Zahnscheibe auf eine Trommel übertragen, die ihrerseits mit der Schraube verbunden ist. Eine stärkere Untersetzung erfordert einen entsprechend großen Trommeldurchmesser, bei welchem Interferenzen der Zahnteilung den Eingriff der Zähne stören können. Um dem zu begegnen, sind zwei seitlich angeordnete Führungsrollen vorhanden, welche den Eingriffsbogen des Zahnriemens auf einen relativ kleinen Winkel begrenzen.

Aus der DE-AS 2 723 062 schließlich ist eine mechanische Verstellvorrichtung für Verstellschlitten bekannt, die einerseits ohne zusätzliche Einrichtung mit Selbsthemmung arbeitet, andererseits aber keinerlei aufwendige Bearbeitung des angetriebenen Getriebeteils erfordert. Es handelt sich dabei um eine intermittierend arbeitende Verstelleinrichtung, die bei gleichbleibender Winkelgeschwindigkeit des Zahnrades eine Bewegungsphase und eine Ruhephase der vom Zahnrad angetriebenen Zahnstange in jeweils wechselnder Folge ermöglicht.

Der Erfindung liegt die Aufgabe zugrunde, einen Präzisionsantrieb zu schaffen, der einfach aufgebaut ist und aufgrund seiner Steifigkeit auch für schwerere Maschinen zum Einsatz kommen kann.

Die Lösung dieser Aufgabe erfolgt mit Hilfe der kennzeichnenden Merkmale des Anspruchs 1.

Auf diese Weise wird innerhalb des Eingriffsbereichs eine konstante Krümmung im Verlauf der Zahnkette und damit ein exakt gleichbleibender Flankenwinkel der Zähne der Kette gewährleistet. Dies ist Voraussetzung für ein spielfreies Eingreifen der einander zugeordneten Teile und damit auch für einen sowohl in einer ersten Richtung als auch in einer Gegenrichtung präzise arbeitenden Antrieb zur Umwandlung einer Dreh- in eine Linearbewegung.

Vorteilhafte Weiterbildungen ergeben sich aus den Unteransprüchen.

Die Erfindung wird nachfolgend unter Bezugnahme auf die Zeichnungsfiguren beispielsweise erläutert. Es zeigen :

Fig. 1 einen Zahnkettenantrieb mit einer federbelasteten Führungskufe,

Fig. 2 einen Zahnkettenantrieb mit einer Vielzahl von Zahnrädern, die insgesamt an der Eingriffsstelle zwischen Zahnkette und Zahnstange eine Führung mit großem Krümmungsradius für die Zahnkette bilden,

Fig. 3 eine Anordnung gemäß Fig. 2 mit der Führung der Zahnkette im Eingriffsbereich dienenden Zahnrädern in mehreren Spuren,

Fig. 4 eine aus Stützkörper, Wälzkörpern und Polyamid- bzw. flexiblem Stahlmantel gebildete Führung für die Zahnkette im Eingriffsbereich,

Fig. 5 als Führungskörper für die Zahnkette im Eingriffsbereich dienendes Paar von kegel- bzw. kegelstumpfförmigen Stützrädern,

Fig. 6 eine Zwillingsanordnung von Stützräderpaaren gemäß Fig. 5,

Fig. 7 eine Portalanordnung mit zwei Zahnkettenantrieben, die über eine gemeinsame Welle miteinander verbunden sind und,

Fig. 8 eine nach dem Baukastenprinzip aufgebaute Zahnstange für den Eingriff der Zahnkette.

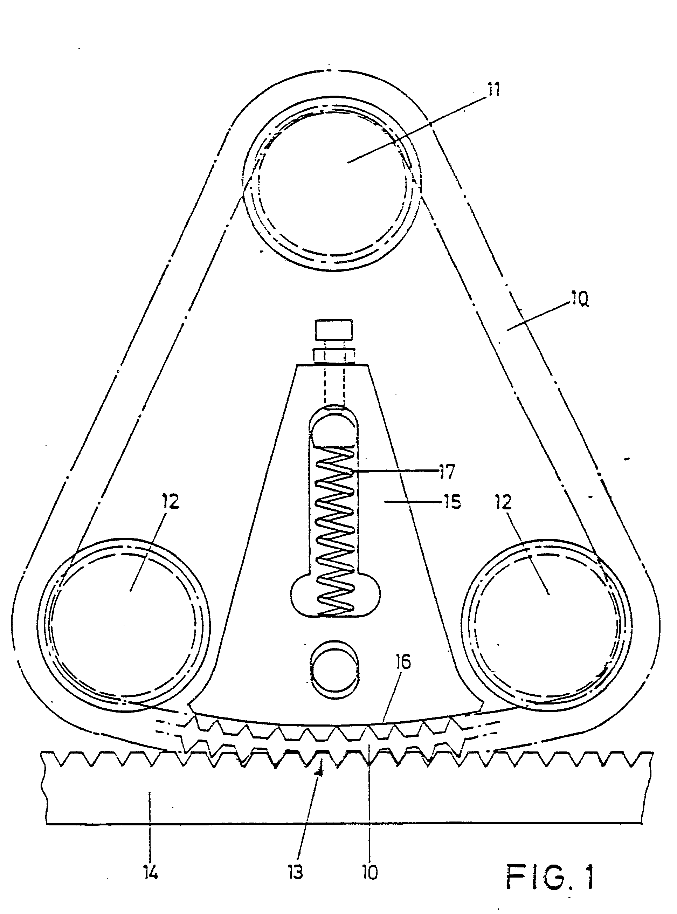

In Fig. 1 wird eine Zahnkette 10 über ein Antriebsrad 11 und zwei erste Umlenkelemente in Gestalt von Umlenkzahnrädern 12 (Triebstockverzahnung) geführt. Eine solche Zahnkette 10 setzt sich aus einer Vielzahl von Einzellaschen zusammen, die völlig symmetrisch aufgebaut sind und deren Schwenkpunkt demnach mittig liegt. Dadurch verändern sich aber die Flankenwinkel der einzelnen Laschen beim Verschwenken. Im Eingriffsbereich der Zahnkette 10 muß daher eine ganz bestimmte Verschwenkung mit zugehörigem Flankenwinkel vorliegen, soll ein guter Eingriff gewährleistet sein. Eine solche Zahnkette 10 ermöglicht eine hohe Kraftübertragung und einen hohen Wirkungsgrad bei geringer Gelenkabnützung, da infolge der Wiegegelenke eine rollende Reibung gegeben ist. Daraus ergibt sich auch ein ruhiger Lauf, selbst bei hohen Geschwindigkeiten. Ein weiterer Vorteil sind die geringen rotierenden Massen. Im Eingriffsbereich 13 zwischen Zahnkette 10 und Zahnstange 14 wird die Zahnkette mittels einer Führungskufe 15 mit einem Führungsprofil 16 (zweites Umlenkelement) mit großem Krümmungsradius derart in das Profil der Zahnstange 14 hineingedrückt, daß ein großer Überdeckungsgrad und eine spielfreie Führung erreicht werden. Die Führungskufe 15 steht dabei unter der Wirkung einer Feder 17, die die Führungskufe 15 gegen die Zahnkette 10 und diese wiederum gegen das Profil der Zahnstange 14 drückt. Durch das Führungsprofil 16 mit großem Krümmungsradius wird der bereits zuvor erwähnte große Überdeckungsgrad im Eingriffsbereich 13 der Zahnkette 10 erreicht. Während ein solcher großer Überdeckungsgrad normalerweise nur mit sehr großen Umlenkelementen erreichbar ist, die dann auch einen entsprechenden Raumbedarf haben, werden im vorliegenden Fall gleichzeitig ein großer Krümmungsradius mit den sich daraus ergebenden Vorteilen und eine relativ kleine Baugröße erzielt. Zwischen dem Führungsprofil 16 der Führungskufe 15 und der Zahnkette 10 wird die Reibung durch an sich bekannte Schmiermittel im ausreichenden Maß herabgesetzt. Die Aufgabe der Führungskufe 15 kann ein Stützrad übernehmen, wobei das Stützrad einen elastischen Umfangsbereich aufweisen kann, der bei Bedarf mit einem flexiblen Stahlbandmantel oder einem faserarmierten Kunststoffmantel umgeben ist, um den Verschleiß herabzusetzen.

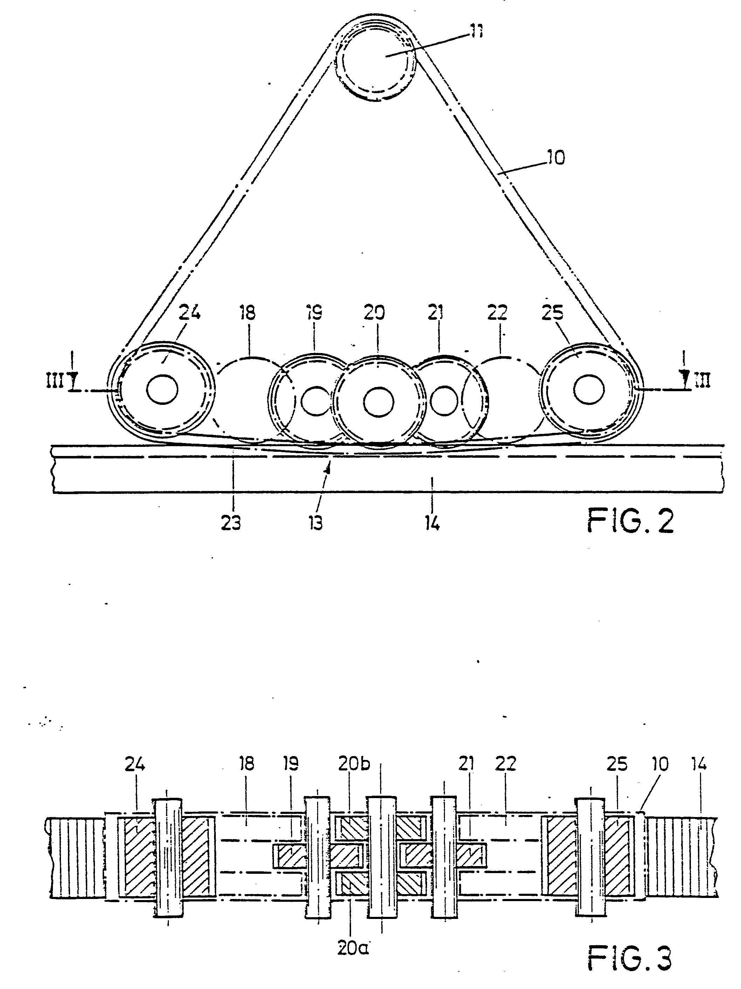

Anstelle der Führungskufe 15 gemäß Fig. 1 kann jedoch auch — wie in Fig. 2 dargestellt — eine Vielzahl von Zahnrädern 18 bis 22 mit jeweils kleinem Krümmungsradius so zueinander angeordnet werden, daß sie insgesamt eine Hüllkurve 23 mit großem Krümmungsradius bilden. Das jeweils erste Zahnrad 24 bzw. letzte Zahnrad 25 übernimmt dabei die Funktion eines Umlenkrades für die Zahnkette 10. Durch diese Anordnung bildet der Kettenantrieb insgesamt in der Seitenansicht im wesentlichen ein Dreieck, das aus den beiden als Umlenkzahnrädern dienenden Zahnrädern 24 und 25 sowie dem Antriebsritzel 11 gebildet wird. Im Eingriffsbereich 13 zwischen Zahnkette 10 und Zahnstange 14 wird dabei die Zahnkette 10 mit einem großen Krümmungsradius mit der Zahnstange 14 in Eingriff gehalten. Die sich daraus ergebenden Vorteile wurden bereits weiter oben erwähnt.

In Fig. 3 wird eine Anordnung gemäß Fig. 2 dargestellt, bei der die einzelnen Zahnräder 18 bis 22 in mehreren Spuren angeordnet und von Spur zu Spur so gegeneinander versetzt sind, daß die Hüllkurve weitgehend lückenlos von den Zahnrädern 18 bis 22 gebildet wird. Die Führung der Zahnkette 10 wird dadurch weiter verbessert.

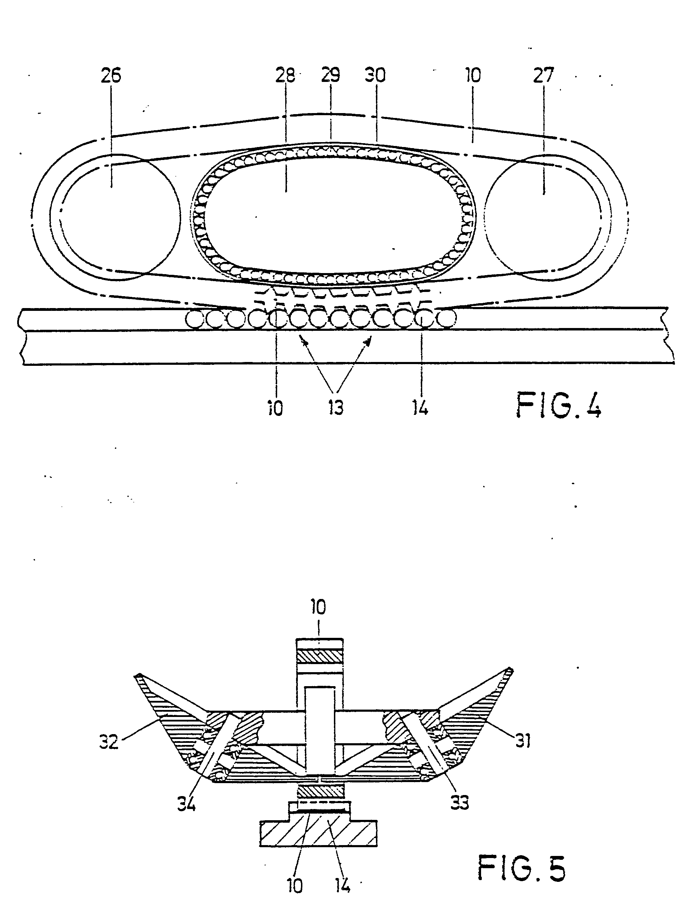

In Fig. 4 wird die gewünschte Führung der Zahnkette 10 im Eingriffsbereich 13 mit der Zahnstange 14 durch einen Stützkörper 28 mit entsprechender Formgebung erreicht, der zur Verminderung der Reibung mit Wälzkörpern 29 umgeben ist, die unter Zuhilfenahme eines Mantels 30 als Polyamid oder flexiblem Stahl auf dem Stützkörper 28 gehalten werden, wobei der Mantel 30 sich auf dem Stützkörper 28 abwälzen kann. Zu beiden Seiten des Führungskörpers 28 sind Umlenkzahnräder 26 und 27 vorhanden, von denen eines gleichzeitig die Funktion eines Antriebsritzels übernimmt. Um gewisse Höhenschwankungen beim Befahren der vorgegebenen Wegstrecke auszugleichen, kann der Führungskörper 28 in der Höhe beweglich gelagert werden. In diesem Fall wird die Spannung der Zahnkette 10 bei etwaigen Höhenschwankungen praktisch nicht beeinflußt, da der Längenänderung des einen Trums der Zahnkette 10 eine entsprechende umgekehrte Längenänderung des anderen Trums zugeordnet ist. Die Zahnkette 10 kann auch direkt auf dem Stützkörper 28 geführt werden. Die Wälzkörper dienen lediglich einer Verminderung der Reibung. Der Mantel 30 kann auf der der Zahnkette 10 zugewandten Seite ein Zahnprofil aufweisen.

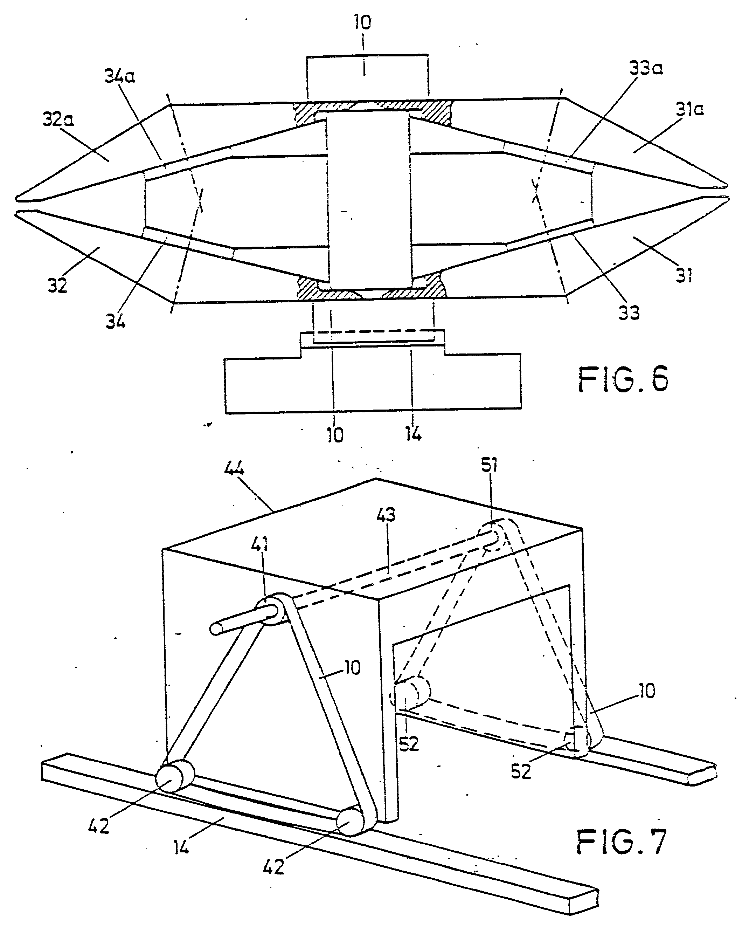

Es kann auch gem. Fig. 5 ein Paar von kegel- bzw. kegelstumpfförmigen Stützrädern 31 bzw. 32 vorgesehen werden, die die Zahnkette 10 im Eingriffsbereich 13 mit der Zahnstange 14 mit relativ großem Krümmungsradius in das Profil der Zahnstange 14 hineindrücken. Ähnlich wie bereits zuvor im Zusammenhang mit anderen Figuren beschrieben, können auch hier mehrere solcher Stützräder 31 bzw. 32 in Bewegungsrichtung der Zahnkette 10 hintereinander angeordnet werden. Die Rotationsachsen 33 und 34 der Stützräder 31 und 32 werden dabei derart unter einem spitzen Winkel zueinander angeordnet, daß die zwei einander nahezu berührenden Mantellinien auf der der Zahnkette 10 zugewandten Seite praktisch eine gemeinsame Gearde bilden. Wie in Fig. 6 dargestellt, können die Führungsräder 31 und 32 auch in Bezug auf das obere bzw. untere Trum der Zahnkette 10 als Zwillingsausführung angeordnet werden, so daß zum Führungsrad 31 ein entsprechendes Führungsrad 31 a und zum Führungsrad 32 ein entsprechendes Führungsrad 32 a gehört, deren Rotationsachsen 33 a und 34 a den gleichen Winkel miteinander bilden wie die Rotationsachsen 33 und 34.

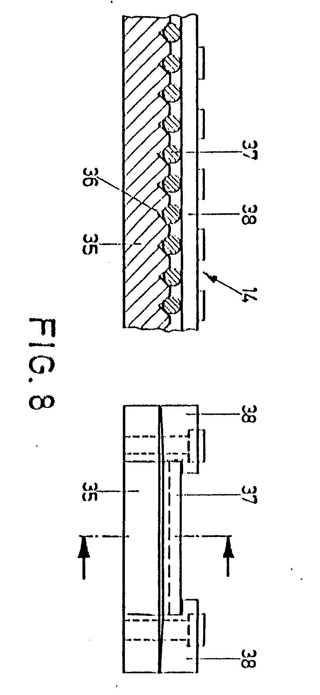

In Fig. 7 ist eine Portalausführung dargestellt, bei der die Zahnkette 10 über Umlenkrollen 42 bzw. 52 und Antriebsritzeln 41 bzw. 51 geführt wird, wobei die Antriebsritzel 41 und 51 über eine gemeinsame Welle 43 miteinander verbunden sind. Durch eine solche Anordnung wird eine gleichmäßige Bewegung beider Zahnkettenantriebssysteme gewährleistet und damit die Gefahr eines Verkantens des Portals 44 vermieden.

Der Aufbau der Zahnstange 14 ist auch nach dem Baukastenprinzip möglich. Zu diesem Zweck wird der untere Teil 35 der Zahnstange 14 in vorgegebener Teilung mit Aufnahmenuten 36 versehen, die quer zur Längserstreckung der Zahnstange 14 verlaufen und rechteckig, dreieckig oder auch halbrund sein können. In diese Nuten 36 werden feingeschliffene Zylinderbolzen 37 eingelegt, woraufhin die Zylinderbolzen 37 mittels einer Spannpratze 38 mit dem Unterteil 35 der Zahnstange 14 verschraubt werden. In Abwandlung der oben beschriebenen Anordnung könnten die Zylinderbolzen 37 selbstverständlich auch einseitig in Bohrungen mit leichtem Preßsitz aufgenommen werden und lediglich auf der anderen Seite in Quernuten 36 mittels einer Spannpratze 38 gehalten werden.

Eine solche Ausgestaltung der Zahnstange 14 bietet eine große Flexibilität in der Herstellung bei relativ geringen Kosten und bietet darüber hinaus den Vorteil, daß etwa verschlissene Abschnitte der Zahnstange 14 mit nur geringem Aufwand erneuert werden können.

## Patentansprüche

1. Antrieb mit einem endlosen, zweiseitig verzahnten und in eine Zahnstange (14) eingreifenden Treibelement, mindestens einem Antriebszahnrad und ersten Umlenkelementen, wobei das Treibelement im gesamten Eingriffsbereich mit der Zahnstange von einem zweiten Umlenkelement mit einem gegenüber dem ersten Umlenkelement großen wirksamen Krümmungsbereich geführt wird, dadurch gekennzeichnet, daß zur Anwendung bei einem Präzisionsantrieb das Treibelement als Zahnkette (10) ausgebildet ist und das zweite Umlenkelement (16 ; 18 bis 22 ; 28 ; 31, 32) einen gleichbleibend großen wirksamen Krümmungsradius aufweist.

2. Antrieb nach Anspruch 1, dadurch gekennzeichnet, daß das zweite Umlenkelement aus einer Vielzahl von in die Zahnkette eingreifenden Zahnrädern (18 bis 22) mit jeweils kleinem Krümmungsradius im Eingriffsbereich (13) der Zahnkette (10) besteht, die insgesamt eine Hüllkurve (23) mit großem Krümmungsradius bilden.

3. Antrieb nach Anspruch 2, dadurch gekennzeichnet, daß die Zahnräder (18 bis 22) mit jeweils kleinem Krümmungsradius mehrspurig nebeneinander und von Spur zu Spur gegeneinander versetzt angeordnet sind.

4. Antrieb nach Anspruch 1, dadurch gekennzeichnet, daß das zweite Umlenkelement (28) von Wälzkörpern (29) umgeben ist, die ihrerseits von einem Mantel (30) aus Polyamid oder verformbarem Stahl umgeben sind.

5. Antrieb nach Anspruch 1, dadurch gekennzeichnet, daß das zweite Umlenkelement ein Stützkörper (28) mit einem Rollenumlaufschuh mit gewölbter Lauffläche ist.

6. Antrieb nach Anspruch 1, dadurch gekennzeichnet, daß das zweite Umlenkelement als elastisches Stützrad mit einem Außenmantel aus Stahlband oder faserarmiertem Kunststoff ausgebildet ist.

## Claims

1. Drive with an endless driving element toothed on two sides and engaging into a rack (14), at least one driving gear wheel and first deflecting elements, the driving element being guided, in the entire region of engagement with the rack, by a second deflecting element with an effective range of curvature which is large in relation to the first deflecting element, characterized in that, for use in a precision drive, the driving element is designed as a toothed chain (10), and the second deflecting element (16 ; 18-22 ; 28 ; 31,32) has a constant effective radius of curvature.

2. Drive according to Claim 1, characterized in that the second deflecting element consists of a plurality of gear wheels (18-22) which engage into the toothed chain ans each have a small radius of curvature in the region of engagement (13) of the toothed chain (10), and which as a whole form a enveloping curve (23) of large radius of curvature.

3. Drive according to Claim 2, characterized in that the gear wheels (18-22), each with a small radius of curvature, are arranged next to one another in a multi-track manner and offset relative to one another from track to track.

4. Drive according to Claim 1, characterized in that the second deflecting element (28) is surrounded by rolling bodies (29) which are themselves surrounded by a casing (30) made of polyamide or deformable steel.

5. Drive according to Claim 1, characterized in that the second deflecting element is a supporting body (28) with a roller rotation shoe having a curved contact surface.

6. Drive according to Claim 1, characterized in that the second deflecting element is designed as an elastic supporting wheel with an outer casing consisting of strip steel or fibre-reinforced plastic.

## Revendications

1. Transmission comprenant un élément de transmission sans fin à denture double et coopérant avec une crémaillère (14), au moins une roue dentée menante et des premiers éléments de renvoi, l'élément de transmission étant guidé, dans toute la zone d'engrènement avec la crémaillère, par un second élément de renvoi présentant, par rapport au premier élément de renvoi, une grande région de courbure efficace, caractérisée par le fait que, en vue d'une utilisation dans une transmission de précision, l'élément de transmission est réalisé sous la forme d'une chaîne dentée (10) et le second élément de renvoi (16 ; 18 à 22 ; 28 ; 31, 32) possède un rayon de courbure efficace de grandeur constante.

2. Transmission selon la revendication 1, caractérisée par le fait que le second élément de renvoi se compose d'un grand nombre de pignons (18 à 22) qui sont en prise dans la chaîne dentée, présentent à chaque fois un petit rayon de courbure dans la zone d'engrènement (13) de la chaîne dentée (10) et forment, globalement, une enveloppante (23) à grand rayon de courbure.

3. Transmission selon la revendication 2, caractérisée par le fait que les pignons (18 à 22) présentant à chaque fois un petit rayon de courbure sont disposés en juxtaposition sur plusieurs pistes, et sont décalés les uns des autres d'une piste à l'autre.

4. Transmission selon la revendication 1, caractérisée par le fait que le second élément de renvoi (28) est entouré par des roulements (29) qui sont entourés, à leur tour, par une enveloppe (30) en polyamide ou en acier déformable.

5. Transmission selon la revendication 1, caractérisée par le fait que le second élément de renvoi est un corps de soutien (28) pourvu d'un patin à circulation de rouleaux, présentant une surface de roulement bombée.

6. Transmission selon la revendication 1, caractérisée par le fait que le second élément de renvoi est réalisé sous la forme d'une roue élastique de soutien, munie d'une enveloppe externe en un ruban d'acier ou en une matière plastique à armure en fibres.

FIG. 1

0 150 058

FIG. 2

FIG.3

2

FIG.4

FIG.5

3

0 150 058

FIG.6

FIG.7

FIG. 8